Europäisches Patentamt

(19) European Patent Office

Office européen des brevets

(11) **EP 0 655 968 B1**

(12) **FASCICULE DE BREVET EUROPEEN**

(45) Date de publication et mention
de la délivrance du brevet:
**18.12.1996 Bulletin 1996/51**

(21) Numéro de dépôt: **93917864.6**

(22) Date de dépôt: **11.08.1993**

(51) Int. Cl.$^6$: **B29C 47/02**

(86) Numéro de dépôt international:
**PCT/FR93/00805**

(87) Numéro de publication internationale:
**WO 94/04338 (03.03.1994 Gazette 1994/06)**

(54) **APPAREIL DE PRODUCTION, PAR EXTRUSION, EN CONTINU, DE TUBES COMPOSITES RENFORCES PAR UN INSERT**

EXTRUSIONSVORRICHTUNG ZUR KONTINUIERLICHEN HERSTELLUNG VON ZUSAMMENGSETZTEN DURCH EINEN EINSATZ VERSTÄRKTEN ROHREN

APPARATUS FOR CONTINUOUS EXTRUSION OF COMPOSITE TUBES REINFORCED BY AN INSERT

(84) Etats contractants désignés:
**DE DK ES FR GB GR IT NL**

(30) Priorité: **21.08.1992 FR 9210182**

(43) Date de publication de la demande:
**07.06.1995 Bulletin 1995/23**

(73) Titulaire: **COFLEXIP**
**92100 Boulogne-Billancourt (FR)**

(72) Inventeur: **DO, Anh, Tuan**
**F-95240 Cormeilles-en-Parisis (FR)**

(74) Mandataire: **Levy, David et al**
**c/o S.A. Fedit-Loriot**
**38, avenue Hoche**
**75008 Paris (FR)**

(56) Documents cités:
**US-A- 3 526 692**      **US-A- 3 969 052**

## Description

La présente invention concerne un appareillage pour la fabrication par extrusion et en continu, d'un tube armé par un insert, lequel tube pouvant être notamment utilisé comme élément constitutif d'un flexible plus complexe pour des applications dans le domaine de l'exploitation pétrolière et devant résister à la pression interne élevée susceptible d'être engendrée au cours du transport d'un fluide, sous forte pression.

Un tube armé par un insert est un tube composite comprenant une paroi en matériau plastique renforcé par un élément de renforcement constitué par l'enroulement hélicoïdal, à pas relativement faible, d'un profilé, tel qu'un fil, noyé dans ladite paroi, de section constante et qui est relativement dur ou résistant.

Depuis longtemps, on a cherché à améliorer les propriétés mécaniques de tels tubes, de manière à pouvoir résister tant aux pressions externes qu'aux pressions internes conduisant à une déformation vers l'extérieur ou gonflement (dilatation) dudit tube.

La nécessite d'armer ou de renforcer les tubes est très vite apparue.

Une première tentative, a été d'insérer une armature, sous la forme d'un fil enroulé hélicoïdalement, entre deux couches de matériau.

Les autres propositions faites jusqu'à maintenant, consistent à noyer une armature ou insert dans la masse d'une matière plastique. Le procédé par extrusion d'un tube armé est le plus souvent utilisé.

De nombreuses publications concernent une fabrication par extrusion et en continu d'un tube armé. On peut se référer utilement aux brevets U.S. 2 620 514, 2 730 761, 3 526 692, 3 725 178, 3 969 052 et 4 113 820 ainsi qu'aux brevets français 810 638, 1 546 655 et 2 506 661 et suisse 279 391.

Dans cet art antérieur, un insert enroulé hélicoïdalement est mis en place autour d'un mandrin et il est déplacé, le long de ce mandrin, par des moyens d'entraînement, jusqu'à une chambre dite de confluence où il est noyé dans une matière plastique sortant d'une extrudeuse.

Les divers dispositifs décrits dans ces brevets diffèrent entre eux par la structure et/ou l'aménagement du mandrin et des moyens d'entraînement.

Dans le brevet français 810 638, le dispositif comprend une vis d'Archimède dont le pas correspond sensiblement à celui de l'insert, ladite vis étant solidaire et entraînée en rotation par une enveloppe cylindrique. Un manchon est monté libre sur le moyeu de la vis et il délimite avec une partie de la tête d'extrusion, une chambre annulaire dans laquelle sont admis la matière plastique et l'insert amené par ladite vis. L'immobilisation du manchon en rotation est obtenue, semble-t-il, par la viscosité de la matière plastique utilisée. Toutefois, un inconvénient d'un tel dispositif est qu'on ne peut utiliser un manchon et un mandrin d'une grande longueur et que l'insert frotte constamment sur ledit manchon qui s'use très rapidement, l'insert pouvant même être rompu en raison de ce frottement important. De plus, le reflux de la matière plastique vers l'arrière ou en amont de la tête d'extrusion n'est vraiment pas empêché surtout après usure du manchon.

Un progrès important a été réalisé avec le dispositif décrit et représenté dans les brevets US 3 969 052 et 4 113 820 sur lequel repose le préambule de la revendication 1. Dans un mode de réalisation particulier, le dispositif comprend une tête d'extrusion alimentée en matière plastique, un mandrin fixe disposé à l'intérieur d'une enveloppe tournante, cette dernière comprenant une extrémité avant, en aval située du côté de la tête d'extrusion par opposition à l'extrémité amont qui est fixée sur un support fixe, ladite extrémité aval étant pourvue de filetages dans lesquels l'insert est engagé et entraîné en translation sur le mandrin fixe. Toutefois, comme cela apparaît clairement sur les dessins, le mandrin est en porte à faux sur le support fixe et il n'est centré que dans la zone de l'extrémité aval de l'enveloppe tournante. Un défaut de centrage, aussi faible soit-il, peut conduire à un mauvais centrage de l'insert dans la matière plastique d'enrobage et, par la même, à une modification des propriétés mécaniques du tube armé fini qui peut présenter alors des zones de moindre résistance.

Dans le brevet français 2 506 661, le dispositif, décrit et représenté, comprend des arrivées de matière plastique qui sont perpendiculaires à la chambre de confluence, et quatre rouleaux qui sont, d'une part, placés à distances angulaires égales l'un de l'autre autour du mandrin qui est fixé par une de ses extrémités à un châssis et, d'autre part, décalés axialement ou latéralement l'un de l'autre à raison d'environ 1/4 du diamètre du fil constituant l'insert, lequel diamètre correspond au pas minimum de l'hélice de l'insert lorsque les spires sont resserrées jusqu'au contact. Les rouleaux sont prévus pour agir sur le fil de l'hélice, dans la zone précédent son admission dans la tête d'extrusion, de manière à rapprocher les spires de l'hélice avant qu'elles ne pénètrent dans la chambre de confluence où elles sont noyées, après relâchement, dans la matière plastique.

Dans le brevet U.S. 3 526 692, il s'agit d'une extrusion en deux opérations successives de deux couches concentriques entre lesquelles est disposé un fil enroulé hélicoïdalement et il est prévu des doigts flexibles et élastiques pour centrer le tube, dans une seconde tête d'extrusion. Dans ce cas, il s'agit de centrer la partie interne du tube pendant une deuxième étape de l'extrusion de matière plastique.

Aussi longtemps qu'on extrude des tubes armés de faible longueur, le mandrin ou élément fixe peut être du type cantilever, de faible longueur et n'être supporté qu'a une de ses extrémités. Mais, lorsque la longueur du mandrin est plus importante, toute déformation du mandrin dans le sens radial peut entraîner une modification dans la structure du tube armé et, par suite, de ses propriétés mécaniques, ce qui n'est pas acceptable dans le cas d'une fabrication continue d'un tube de grande longueur.

Il est donc apparu le besoin de réaliser un dispositif dans lequel les éléments en mouvement relatif les uns par rapport aux autres soient à la fois centrés et supportés de façon qu'ils n'influent ni sur la structure même du tube armé ni sur les différents composants dudit tube armé, comme par exemple le pas et/ou la concentricité de l'insert ou encore l'épaisseur de la matière plastique dans laquelle est noyé ledit insert.

Pour fabriquer des tubes de très grande longueur, en maintenant l'extrusion de manière continue, sans interruption et ce, pendant des heures ou des jours consécutifs, il est donc apparu la nécessité de réaliser un mandrin de grande longueur. Mais un tel mandrin ne serait plus assez rigide pour être supporté soit à une ses extrémités en cantilever soit par la tête d'extrusion.

Un objet de la présente invention est un appareillage dans lequel le mandrin de grande longueur est supporté et centré malgré la présence de l'insert le long dudit mandrin.

Un autre objet de la présente invention est de réaliser un appareillage dans lequel le mandrin est monté flottant sans être obligatoirement fixé par une quelconque de ses extrémités.

Un autre objet de la présente invention est de réaliser des moyens d'immobilisation en rotation du mandrin qui constituent également des moyens de butée axiale qui peuvent éventuellement constituer des moyens supplémentaires de support et de centrage dudit mandrin.

Un autre objet de la présente invention est de pouvoir assurer une configuration géométrique correcte du tube armé fini, à la sortie de l'extrudeuse, le tube étant alors refroidi de façon à prendre sa résistance mécanique définitive et pouvoir être enroulé sur une bobine de stockage.

D'autres objets et caractéristiques apparaîtront à la lecture de la description d'un mode de réalisation préféré de l'invention, ainsi que des dessins annexés sur lesquels :

La figure 1 est une vue en coupe partielle de l'appareillage selon l'invention comprenant une tête d'extrusion d'une extrudeuse.

Les figures 2 et 2a sont des représentations schématiques et partielles des moyens d'immobilisation en rotation de l'organe rotatif, selon un deuxième mode de réalisation.

La figure 3 est une représentation schématique et partielle des moyens d'immobilisation de l'organe de support, selon un troisième mode de réalisation.

La figure 4 est une représentation schématique des moyens d'admission d'un fluide dans l'organe de support.

La figure 5 est une représentation schématique de deux électro-aimants associés à un conformateur du tube composite produit avec l'appareillage selon l'invention.

La figure 6 est une vue en coupe schématique d'un autre mode de réalisation des moyens de refroidissement.

La figure 7 est une vue en coupe schématique d'un autre mode de réalisation des moyens de blocage.

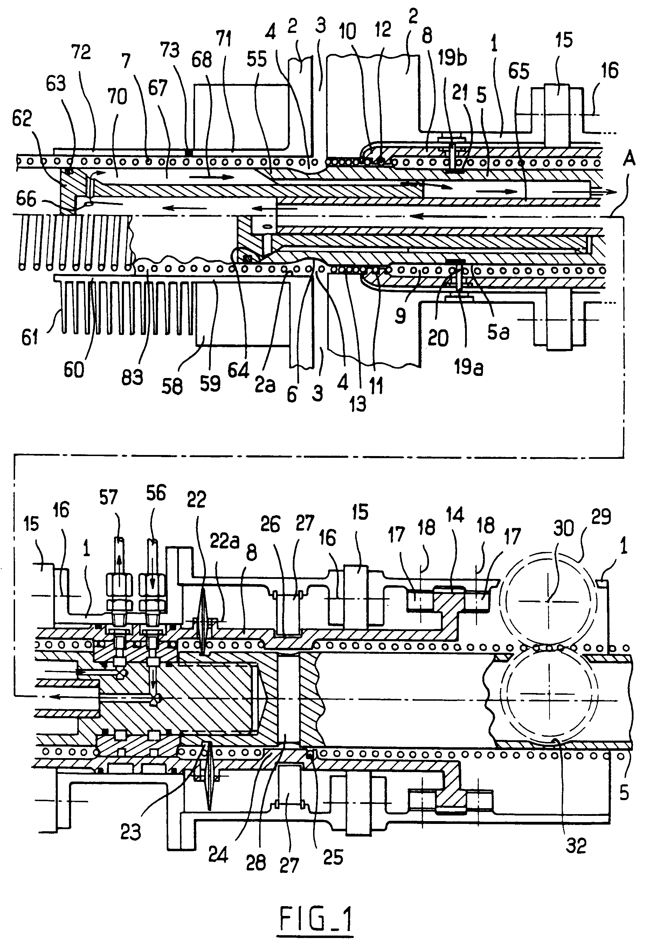

L'appareillage de production par extrusion en continu, de tubes composites renforcés par un insert est représenté sur la figure 1.

L'appareillage est monté sur un bâti 1 et il comprend une tête d'extrudeuse d'équerre 2 qui est solidaire du bâti 1. La tête d'extrusion 2 comprend des canaux 3 ménagés, de préférence, radialement et débouchant dans une chambre de confluence 4.

On peut utiliser, pour réaliser l'extrusion, tout matériau extrudable tel qu'un polymère thermoplastique ou élastomérique, ou un mélange de tels matériaux, ou encore un mélange comportant des charges, par exemple sous forme de fibres ou de microsphères.

Dans le bâti et la tête d'extrusion 2 est monté un mandrin 5 dont la surface extérieure présente une forme générale de révolution autour d'un axe longitudinal A. Sur la surface extérieure du mandrin 5 est ménagée, en regard des canaux 3, une dépression annulaire 6 qui constitue avec la paroi interne 2a de la tête d'extrusion 2, la chambre de confluence 4. Le mandrin 5 s'étend dans le bâti 1, en amont de la chambre de confluence 4, c'est-à-dire vers la droite sur la figure 1, sur une grande longueur. Avantageusement, l'invention permet de réaliser le mandrin sous la forme d'une pièce isolée, cette pièce, qui présente une certaine rigidité et est de préférence métallique, n'étant pas supportée directement, par exemple par encastrement, à son extrémité dans un châssis fixe solidaire du bâti 1, et étant uniquement supportée, centrée et bloquée par des moyens particuliers décrits ci-après. Alternativement, le mandrin 5 peut être supporté, à son extrémité opposée à la tête d'extrusion, par un châssis fixe, les moyens particuliers décrits ci-après assurant un appui complémentaire tel que le mandrin ne risque pas de subir des déformations excessives malgré sa longueur importante.

Un insert 7, constitué par un profilé, ou fil, de grande longueur, de section constante, par exemple circulaire, est enroulé hélicoïdalement selon un pas prédéterminé ou nominal P et un diamètre moyen constant. Il est introduit à partir de l'extrémité droite, sur la figure 1, du bâti, de façon à être disposé et pouvoir progresser vers la tête d'extrusion autour et à l'extérieur du mandrin 5. Des procédés connus permettent de former l'insert 7 simultanément, au fur et à mesure de son insertion dans l'appareillage selon l'invention et de l'extrusion du tube, par spiralage continu du fil, l'insert ainsi produit étant immobile en rotation autour de son axe longitudinal. Alternativement, l'insert peut être réalisé séparément, dans une opération préalable, puis stocké avant sa mise en oeuvre pour la fabrication du tube composite.

L'insert peut être en tout matériau approprié tel que de l'acier et il présente tant en diamètre et autres caractéristiques dimensionnelles qu'en caractères physico-mécaniques, les valeurs adéquates pour être utilisé comme élément de renforcement dans un tube composite, en fonction des applications dudit tube composite extrudé en continu selon l'invention.

Un organe rotatif ou d'entraînement en rotation 8 dont l'intérieur est creux et dont au moins la surface intérieure présente, de préférence, une forme générale de révolution autour de l'axe longitudinal A du mandrin, est disposé dans le bâti 1 et reçoit en son intérieur 9, notamment le mandrin 5 et l'insert 7, ce dernier étant alors logé entre l'organe rotatif 8 et le mandrin 5. L'extrémité aval 10 de l'organe rotatif 8 comporte des moyens d'entraînement en translation de l'insert 7. Dans le cas de l'exemple illustré sur la figure 1, lesdits moyens d'entraînement en translation sont constitués par une rainure hélicoïdale 11 taillée en creux dans la paroi interne cylindrique de la partie aval ou tête 10 de l'organe rotatif 8. La partie aval 10 constitue ainsi une sorte d'écrou, avec un pas d'hélice de préférence égal ou inférieur au pas nominal P de l'insert 7, ce pas nominal P étant défini comme le pas que présente, naturellement, l'hélice formée par l'insert en l'absence de toute force de pesanteur ou autre force extérieure. De préférence, la rainure hélicoïdale 11 présente une section carrée, sur une longueur suffisante pour insérer au moins une spire 12 de l'insert 7. La tête 10 de l'organe rotatif 8 est située à une distance appropriée de la chambre de confluence 4, de manière à délimiter un espace 13 dans lequel de préférence, plusieurs spires de l'insert sont libres de se déplacer l'une par rapport à l'autre et notamment l'une vers l'autre, dans la direction d'une compression, pour constituer une étanchéité, en empêchant la matière admise dans la chambre de confluence 4 de refluer vers l'amont. Le nombre de spires 12 de l'insert admis dans la tête 10 est de préférence égal à deux ou trois.

Les moyens d'entraînement en translation de l'insert 7 peuvent être de tout type connu tel que celui décrit dans le brevet français 2 506 661 (disques rotatifs) ou celui décrit dans le brevet U.S. 2 730 761 (disques ou bandes sans fin).

L'organe rotatif 8 est entraîné en rotation au moyen d'une cinématique appropriée, (non représentée) dont seule une couronne dentée 14 est représentée sur la figure 1, et qui engrène avec un moyen quelconque relié à un moteur également non représenté. La vitesse de rotation ω de l'organe rotatif 8 est déterminée, en fonction du pas nominal P de l'insert 7, de façon à obtenir la valeur désirée de la vitesse de translation v de l'insert 7 parallèlement à l'axe A, ces 3 valeurs étant reliées par la formule :

$$\omega_{tours/min} = \frac{V_{cm/min}}{P_{cm/1} \text{ tour (de spire)}}$$

Normalement, la vitesse v de translation de l'insert 7 est égale à la vitesse $V_0$ à laquelle le tube composite produit progresse en sortant de l'extrudeuse, la vitesse

$V_0$ étant déterminée par les moyens de traction (non représentés) tels que des «trichenilles» qui agissent sur le tube composite en aval de la tête d'extrusion et du dispositif de refroidissement. On conçoit que si la vitesse angulaire ω est différente de la vitesse de synchronisme $\omega_0$ déterminée par la relation $\omega_0 = V_0/P$ , il en résulte que l'insert 7 présente, dans le tube composite final produit une valeur de pas d'hélice différente de sa valeur nominale P, ce qui peut constituer un défaut plus ou moins nuisible.

L'organe rotatif 8 est centré et supporté par deux paliers réalisés ici sous la forme de galets 15 tournant sur des axes 16 solidaires du bâti 1, et il est, en outre, arrêté en translation longitudinale par une butée axiale constituée par exemple par une double série de galets 17 dont les axes 18 sont également solidaires du bâti 1, les galets 17 roulant sur les flancs de la couronne dentée 14.

L'appareillage, selon l'invention, comporte au moins un dispositif de support et de centrage du mandrin 5 constitué par des éléments de support radiaux 19 tels que 19a à 19b qui sont dirigés vers le mandrin et solidaires de et disposés à l'intérieur de l'organe rotatif 8 de manière à venir en appui, par leur extrémité intérieure 20, sur la surface extérieure 5a du mandrin 5. Les extrémités intérieures 20 des éléments radiaux 19a, 19b, peuvent ainsi constituer au moins trois portées d'appui, également réparties sur la circonférence formée par la surface extérieure du mandrin, chaque portée d'appui présentant, une longueur circonférentielle qui peut être relativement faible ou quasi ponctuelle. En outre, les portées d'appui sont décalées régulièrement les unes par rapport aux autres dans le sens de l'axe A, les distances entre deux portées consécutives, comptées parallèlement à l'axe A, étant égales entre elles et telles que, compte-tenu du décalage angulaire autour de l'axe A, l'ensemble de ces portées d'appui s'inscrit, sur la surface du mandrin, selon une hélice dont le pas peut être, avantageusement, égal au pas nominal P de l'insert.

Alternativement, les premiers moyens de support et de centrage comportent des éléments de support radiaux continus semblables à des filets d'un écrou et les extrémités intérieures 20 des éléments radiaux peuvent constituer une portée d'appui continue qui présente également, à la surface du mandrin, la forme d'une hélice avec, de préférence, un pas égal au pas P.

En outre, les éléments radiaux présentent dans le sens perpendiculaire à la ligne hélicoïdale formée par les portées d'appui, une épaisseur suffisamment faible pour qu'ils puissent être logés dans l'espace libre entre deux spires contiguës de l'insert lorsque ce dernier présente un pas égal au pas de ladite ligne hélicoïdale de portée d'appui.

Les éléments radiaux 19a, 19b constituant les moyens de support et de centrage sont animés en rotation autour de l'axe A avec la vitesse angulaire de l'organe rotatif 8, l'insert 7 logé dans le cheminement hélicoïdal constitué peut progresser par translation à travers les moyens de support et de centrage qui assurent donc, à travers l'obstacle que constitue l'insert, le positionnement du mandrin et sa coaxialité par rapport à l'organe rotatif.

Dans ce mode de réalisation illustré figure 1, des premiers moyens de support et de centrage du mandrin 5 sont constitués par au moins trois broches radiales 19 dont seules les broches 19a et 19b sont représentées, et de préférence quatre, régulièrement espacées autour du mandrin 5 mais décalées l'une de l'autre longitudinalement, dans le sens de translation de l'insert 7, parallèle à l'axe A, d'un sous-multiple du pas nominal de l'insert de façon à définir un cheminement hélicoïdal avec, de préférence, un pas égal au pas nominal P. Lorsque quatre broches sont utilisées, comme dans le mode de réalisation préféré de l'invention, les broches sont décalées latéralement l'une de l'autre d'un quart de pas. Sur la figure 1, on a représenté schématiquement une broche supérieure 19b qui est décalée longitudinalement d'une broche inférieure 19a. Les broches 19a, 19b sont solidaires de l'organe rotatif 8 de façon que le mandrin soit supporté et centré par l'intermédiaire dudit organe rotatif. Au regard de l'extrémité 20 intérieure des broches 19a, 19b, le mandrin 5 est pourvu sur sa face externe 5a, d'une piste annulaire 21. Les broches 19a, 19b frottent sur ladite piste 21 qui est durcie superficiellement, au niveau de sa face de contact avec les broches, par un traitement de surface approprié tel que, par exemple, un chromage dur, une sulfinisation, un stellitage. Il est également possible, si on le désire, de revêtir la piste 21 par un matériau à très bas coefficient de frottement, comme par exemple le "TEFLON".

Le décalage longitudinal (ou dans le sens de translation de l'insert) des broches qui tournent avec l'organe rotatif 8, de la manière indiquée, permet à l'insert 7 de se déplacer, en translation, sur le mandrin 5, sans que lesdites broches constituent un obstacle quelconque au déplacement dudit insert 7.

Dans le cas où le mandrin 5 constitue une pièce complètement isolée, supportée par l'organe rotatif 8 et les broches 19a, 19b au lieu d'être supportée directement par un bâti fixe à son extrémité opposée à la tête d'extrusion, le mandrin 5 est immobilisé en translation par des moyens de butée axiale.

Dans le mode de réalisation avantageux illustré sur la figure 1, les moyens d'arrêt et de butée sont constitués par au moins un disque 22, de préférence deux, tournant sur des axes 22a solidaires de l'organe rotatif 8, lesdits axes 22a formant avec l'axe A un angle de préférence faible ou nul.

Dans le cas de la figure 1, les disques 22 sont disposés entre les deux séries de galets 15.

Les disques 22 sont d'une part, diamétralement opposés autour du mandrin et d'autre part, décalés longitudinalement ou dans le sens de l'axe A, d'une distance de préférence égale à la moitié du pas nominal P. Les disques 22 roulent dans une gorge annulaire 23 ménagée dans le mandrin 5, les parois latérales de ladite gorge 23 étant durcies ou revêtues d'un matériau à très bas coefficient de frottement, comme cela fut explicité à propos de la piste 21.

Le dispositif de butée axiale peut comprendre un deuxième ensemble (non représenté) avec au moins un, de préférence deux disques réalisés de façon analogue à l'ensemble des deux premiers disques 22, mais décalés d'une certaine distance dans le sens longitudinal de l'axe A, et décalés angulairement à angles droits par rapport aux disques 22, de sorte que leurs axes de rotation s'inscrivent dans un plan diamétral orthogonal au plan défini par les axes 22a des disques 22. Le bord des disques du deuxième ensemble, roule également dans une gorge semblable mais différente de la gorge 23.

En variante, le bord circulaire des disques 22 vient en appui sur le fond de la gorge 23, également durci ou revêtu d'un matériau à faible frottement. Dans ce cas, les disques constituent, en même temps, des seconds moyens de support et de centrage du mandrin 5.

Suivant une autre variante, un ensemble d'au moins trois disques tournants solidaires de l'organe rotatif, semblables aux disques 22, constitue les premiers moyens de support et de centrage du mandrin 5, à la place des broches radiales 19 qui sont illustrées en figure 1. Dans ce cas, lesdits disques tournants présentent un diamètre tel qu'ils viennent en appui radial sur une piste annulaire ménagée sur la surface extérieure du mandrin. Avantageusement, les axes de rotation des disques tournants assurant ainsi le positionnement radial du mandrin peuvent présenter, par rapport à l'axe longitudinal A du mandrin, un angle de valeur complémentaire à l'"angle d'armage" de l'hélice formée par l'insert 7, de telle sorte qu'à l'endroit où elles peuvent se trouver en contact avec l'insert, les faces latérales des disques soient approximativement parallèles aux génératrices du profilé constituant l'insert. L'angle d'armage est l'angle que présente le fil en hélice constituant l'insert par rapport à l'axe A, cet angle pouvant, par exemple, être de l'ordre de 75° à 90°.

Les moyens de butée axiale peuvent également être constitués par au moins une broche ou de préférence un groupe de deux broches radiales et diamétralement opposées, décalées, de préférence, d'un demi pas P dans le sens de l'axe A, solidaires de l'organe rotatif 8, analogues aux broches 19a, 19b, mais dont l'extrémité interne est logée à l'intérieur d'une gorge annulaire pratiquée dans la surface extérieure du mandrin 5, l'immobilisation du mandrin en translation étant alors assurée par le contact selon une ligne radiale entre les broches de butée axiale et les flancs latéraux de la gorge. Il est préférable d'utiliser une gorge pour chaque groupe de broches.

Suivant une autre variante non représentée, les moyens de support et de centrage et/ou les moyens de butée axiale du mandrin peuvent être constitués par un organe formant écrou, solidaire de et à l'intérieur de l'organe rotatif 8, et qui présente un élément radial enroulé hélicoïdalement de façon à présenter une rainure hélicoïdale apte à loger un tronçon de l'insert 7.

Dans le cas où cet organe formant écrou constitue un moyen de support et de centrage du mandrin, l'extrémité intérieure de l'élément radial hélicoïdal constitue une portée d'appui de forme hélicoïdale en contact avec une piste annulaire à la surface du mandrin.

Selon une autre caractéristique importante de l'invention, l'appareillage comprend, en outre, des moyens d'immobilisation en rotation du mandrin 5, lorsque le mandrin 5 constitue un organe isolé supporté par l'organe rotatif 8.

Selon un premier mode de réalisation représenté sur la figure 1, les moyens d'immobilisation en rotation du mandrin 5 sont constitués par un électro-aimant 27 solidaire du bâti 1, qui coopère avec un barreau aimanté 28, emmanché radialement dans le mandrin 5. Les lignes de force du champ magnétique créé engendrent un couple de rappel à la moindre sollicitation en rotation du mandrin 5 qui se trouve donc être immobilisé en rotation.

Dans le mode de réalisation avantageux illustré sur la figure 1, une courte section 24 de l'organe rotatif 8, est munie d'une rainure hélicoïdale 25 dans laquelle est reçue au moins une spire de l'insert 7. La section 24 est conformée de manière à étirer l'insert et avoir un pas accru par rapport au pas nominal dudit insert 7. Dans le cas où la section 24 comprendrait le logement pour deux spires, il faudra que la distance entre les deux spires soit supérieure au pas nominal de l'insert. Le mandrin 5, en regard de la section 24, peut présenter une légère diminution du diamètre extérieur de façon à permettre une légère constriction de la spire de l'insert concernée.

Du côté externe et dans la partie comportant la section filetée 24, l'organe rotatif 8 comprend une gorge 26 apte à permettre le logement des pôles de l'électro-aimant 27 dont la largeur est telle qu'ils peuvent être placés dans l'espace vide entre deux spires consécutives de la partie de l'insert positionnée par la rainure 25.

Cette disposition permet d'augmenter l'efficacité de ce dispositif de blocage magnétique, en réduisant la dimension de l'entrefer entre les pôles magnétiques correspondants de l'électro-aimant et du barreau aimanté.

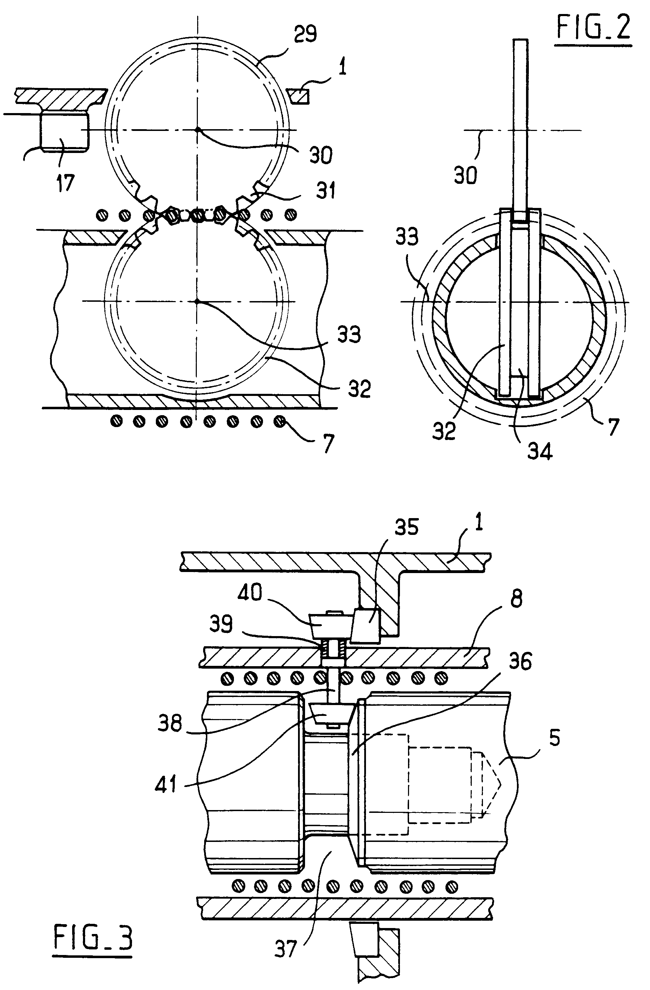

Selon un deuxième mode de réalisation, les moyens d'immobilisation en rotation du mandrin 5, représentés sur la figure 2, sont constitués par un ensemble de roues dentées coopérant entre elles. Une roue dentée 29 est montée libre sur un axe 30 qui est solidaire du bâti 1, en amont de la couronne d'entraînement 14 de l'organe rotatif 8, dans la partie de l'appareillage où aucun élément solidaire de l'organe rotatif ne se trouve intercalé dans l'espace annulaire entre le bâti 1 et l'insert 7 enroulé autour du mandrin 5.

Les dents 31 de la roue dentée 29 présentent un profil approprié pour le passage de l'insert 7, de telle sorte que la roue dentée 29 semble engrener avec l'insert 7 à la façon d'un engrenage entre pignon et crémaillère, mais avec éventuellement un jeu. Une autre roue dentée 32 engrenant, de façon semblable, par des parties latérales avec l'insert 7 et coopérant avec la roue dentée 29 est montée libre sur un axe 33 et elle est solidaire du mandrin 5. La roue dentée 32 fait saillie partiellement au-dessus du mandrin 5 et présente une épaisseur supérieure à celle de la roue dentée 29. Dans son épaisseur, la roue dentée 32 est pourvue d'une rainure 34 dans laquelle s'engagent les extrémités des dents 31 de la roue dentée 29, ce qui empêche la rotation du mandrin 5.

Selon un autre mode de réalisation représenté schématiquement sur la figure 3, les moyens d'immobilisation en rotation du mandrin 5, disposés en aval de la couronne d'entraînement 14, comportent une couronne dentée fixe 35 solidaire du bâti 1. Une autre couronne dentée 36 est montée sur le mandrin 5, dans un espace 37 ménagé à cet effet. Le nombre de dents de la couronne dentée 36 est égal à celui de la couronne dentée fixe 35. Un arbre 38 monté radialement à travers l'organe rotatif 8 et tourillonnant dans un palier 39 solidaire de l'organe rotatif, comprend à chaque extrémité un pignon conique 40, 41. Le pignon 40 engrène avec la couronne dentée fixe 35 et le pignon 41 engrène avec la couronne dentée 36. Comme par ailleurs le nombre des dents des pignons coniques 40 et 41 est le même, il s'ensuit que l'ensemble de couronnes et pignons tel que décrit empêche toute rotation du mandrin 5. On peut obtenir le même résultat avec des nombres de dents différents entre les deux couronnes 35 et 36, ainsi qu'entre les deux pignons coniques 40, 41. Dans ce cas, si l'on définit comme rapport d'engrenage k, le rapport $K = N/n$ où $N$ est le nombre de dents d'une couronne 35 (ou 36), et n le nombre de dents du pignon correspondant 40 (ou 41), on obtient l'immobilisation du mandrin en rotation lorsque les valeurs $k_e$ et $k_i$ des rapports d'engrenage des engrenages respectivement extérieur, 35-40, et intérieur, 36-41, sont égales.

Il est parfois nécessaire de refroidir la matière en fusion constituant la paroi du tube composite formé en aval de la chambre de confluence 4. Lors de la fabrication d'un tube avec insert, comme c'est le cas dans la présente invention, la présence de l'insert même constitue un obstacle au passage d'un liquide de refroidissement à l'intérieur du tube composite produit du fait que l'insert se déplace continuellement depuis l'extrémité amont jusqu'à ladite chambre de confluence 4 où il est noyé dans la matière plastique injectée par les canaux 3 dans la chambre de confluence 4.

Selon une autre caractéristique de l'invention, ce problème est résolu grâce au fait que l'appareil peut comprendre une section dans laquelle l'insert présente un pas de spires accru par rapport au pas nominal qu'il présente de part et d'autre de ladite section et dans le tube terminé.

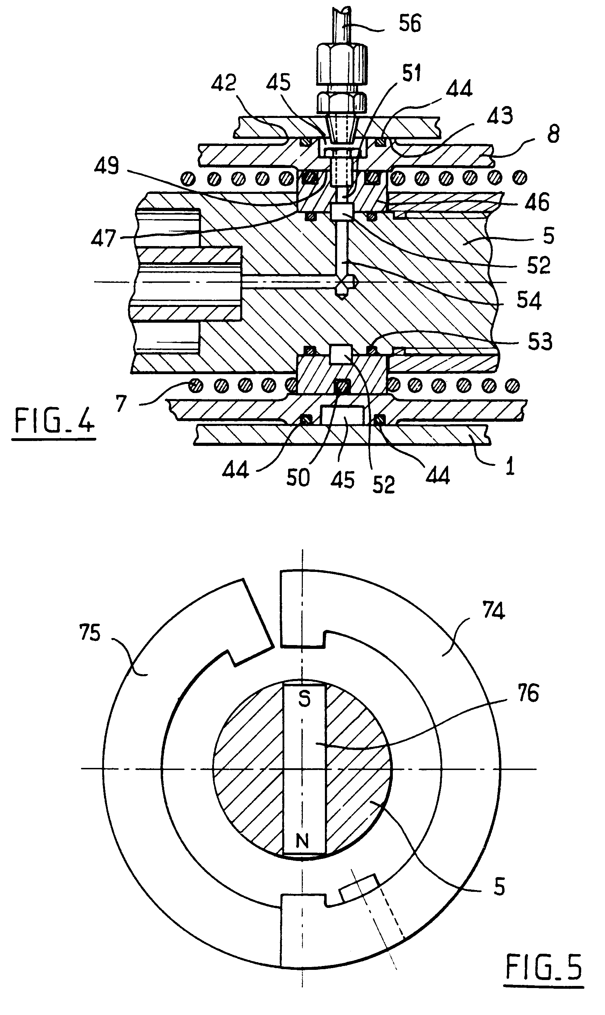

La courte section 24 telle que décrite précédemment peut être modifiée de la manière représentée sur les figures 1 et 4, pour permettre la réalisation d'au moins un dispositif de passage radial de fluide.

L'organe rotatif 8 comporte une portée cylindrique 42 qui est en regard d'une surface interne 43 du bâti 1, l'étanchéité étant assurée par des joints toriques 44. Une chambre annulaire 45 est ménagée de préférence dans la portée 42 entre les joints 44.

Une bague 46, disposée dans un logement 47 prévu à cet effet dans le mandrin 5, à un emplacement correspondant à celui de la portée cylindrique 42, est emmanchée, par exemple à force dans la face interne 49 de l'organe rotatif 8, la bague étant réalisée de façon à pouvoir être mobile dans le logement 47, par rotation autour de l'axe A du mandrin 5. Un passage libre hélicoïdal 50, de section par exemple carrée, peut être ménagé dans la bague 46, avec un diamètre d'hélice et des dimensions en largeur et profondeur de la section tels qu'il est possible d'y loger une ou deux spires de l'insert 7. Dans le mode de réalisation avantageux illustré sur la figure 4, le pas de l'hélice formé par le passage 50 est déterminé comme dans le mode de réalisation décrit précédemment, de façon à accroître le pas des spires de l'insert 7. Cet accroissement du pas des spires est mis à profit pour permettre le logement d'un organe radial creux tel qu'un ajutage 51 qui est, par exemple, vissé dans l'organe rotatif 8 et dans la bague 46, l'étanchéité de la fixation dudit ajutage étant obtenue par des moyens bien connus.

L'extrémité extérieure de l'ajutage 51 débouche dans la chambre annulaire 45. L'extrémité intérieure de l'ajutage 51 débouche dans une chambre annulaire 52 délimitée par une ou deux gorges en regard ménagées dans la bague 46 et/ou le mandrin 5. L'étanchéité entre la bague 46 et le mandrin 5 est réalisée également de part et d'autre de la chambre annulaire 52 par des garnitures d'étanchéité telles que des joints toriques 53. La chambre annulaire 52 est reliée à un conduit interne 54 qui se prolonge, dans le mandrin 5, jusqu'à l'extrémité aval 55 dudit mandrin 5 (figure 1). Le fluide de refroidissement est amené dans la chambre annulaire 45 par une arrivée de fluide 56 classique, montée sur le bâti 1 et reliée à une source de fluide de refroidissement non représentée. Tout comme précédemment, l'insert 7 se déplace à pas forcé dans le passage hélicoïdal 50 de la bague 46, avec un jeu radial suffisant pour permettre la constriction de l'hélice de l'insert. Le fluide de refroidissement, après avoir refroidi la chambre de confluence 4 ou tout autre élément à refroidir, ressort du mandrin 5 pour passer dans le bâti 1 et être évacué par une sortie de fluide 57 grâce à un autre dispositif à joints tournants semblable au premier utilisé pour l'arrivée du fluide.

Il est évidemment possible de réaliser un unique dispositif à joints tournants avec deux passages (entrée/sortie) dans la section à pas de spire accru, comme cela est représenté sur la figure 1.

Un autre mode de réalisation pour accroître, localement, le pas d'hélice d'une section de l'insert peut être le suivant.

Deux dispositifs de blocage du pas de l'insert, chacun solidaire et à l'intérieur de l'organe rotatif 8, sont disposés à une certaine distance l'un de l'autre dans le sens longitudinal de l'axe A, de façon à encadrer la section de l'insert dont le pas doit être augmenté. Chacun de ces deux dispositifs comporte des éléments radiaux dont la trace sur la surface cylindrique contenant l'axe longitudinal de l'insert 7 est en forme d'hélice. L'hélice formée dans chacun des deux dispositifs de blocage présente un pas qui peut, par exemple, être égal au pas nominal P de l'insert 7, et une longueur correspondant à au moins environ une spire complète. Les éléments radiaux hélicoïdaux délimitent ainsi un cheminement hélicoïdal creux dont la largeur et la profondeur sont telles qu'un tronçon de l'insert, correspondant à au moins environ une spire, peut y être logé et assujetti à se déplacer, sans mouvement rotationnel parasite autour de l'axe A, selon un simple mouvement de translation parallèle à l'axe A, avec la vitesse de translation correspondant à la vitesse de déplacement $v_o$ imposée au tube composite produit. L'épaisseur d'un élément radial entre ses faces latérales séparant deux segments du passage hélicoïdal creux, est suffisamment faible pour que, additionnée avec la largeur nécessaire de ce dernier, la longueur totale ainsi obtenue soit égale à la valeur voulue de pas d'hélice.

Il est ainsi possible de déterminer, d'une façon précise et stable, ne variant pas dans le temps au fur et à mesure de la translation de l'insert et de la fabrication du tube composite, une augmentation locale du pas de l'insert grâce au positionnement de deux tronçons de courte longueur, dans les deux dispositifs de blocage du pas. A cette fin, le nombre de spires que présente le pas de l'insert dans l'espace libre entre les deux dispositifs de blocage du pas est réduit par rapport au nombre de spires qui correspondrait au pas nominal P, nombre qui est égal à la longueur axiale de la distance libre divisée par l'amplitude du pas P. Ainsi, par exemple, si la distance libre entre les deux dispositifs de blocage du pas est égal à 6P, on détermine, sur la longueur intercalaire de l'insert un pas dont la valeur moyenne est égale à, par exemple, deux fois, ou trois fois, le pas nominal P en procédant au réglage initial de l'appareillage de manière à ce que le nombre des spires de l'insert intercalé soit égal à trois, ou à deux, au lieu de six. On réalise sans difficulté particulière l'étirement local de l'hélice, qui se comporte comme un ressort à boudin, du fait que sa raideur axiale, dans le sens de l'axe A, est relativement faible.

Dans l'espace entre les deux dispositifs de blocage du pas, on peut mettre en place un organe de passage radial, solidaire de l'organe tournant et dont le diamètre extérieur peut être logé dans l'espace localement agrandi entre deux spires contiguës de l'insert. D'une façon similaire à l'ajutage 51 de la variante illustrée sur la figure 4, l'organe de passage radial est relié de façon étanche, à chacune de ses extrémités extérieure et intérieure, respectivement, à une canalisation 56 du bâti 1 et à une canalisation 54 du mandrin 5, grâce à deux organes du type joint tournant, l'un extérieur et l'autre intérieur, comprenant chacun une chambre annulaire analogue à, respectivement, 45 et 52, et des joints toriques correspondant, respectivement à 44 et 53. On conçoit qu'un dispositif selon ce principe peut être utilisé aussi bien pour le passage d'un fluide que pour une transmission de courant électrique.

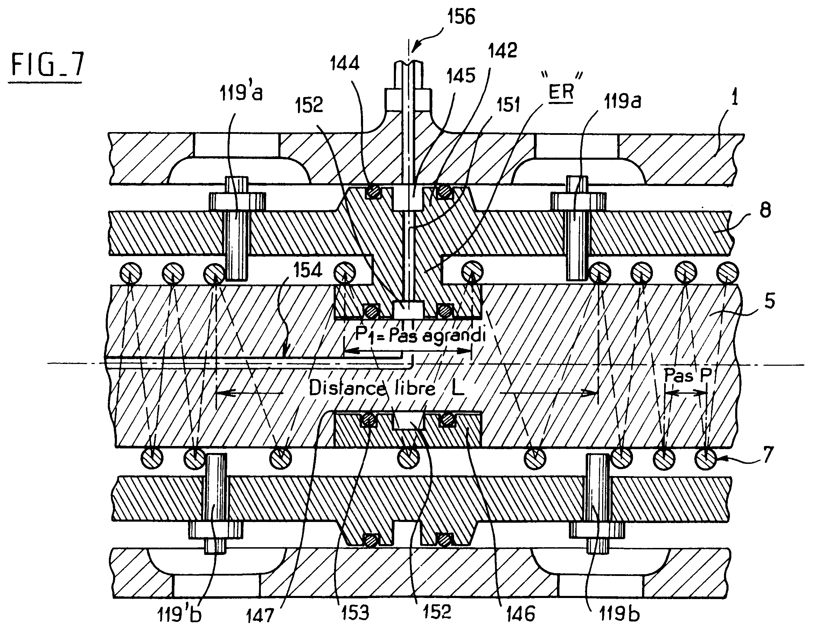

Une variante des dispositifs de blocage est représentée sur la figure 7. Chaque dispositif de blocage 119 et 119' comporte quatre broches radiales 119a à 119d, ou 119'a à 119'd dont seules les broches 119a et 119b, d'une part, et 119'a et 119'b, d'autre part, sont représentées.

Les broches sont fixées sur l'organe d'entraînement rotatif 8, et peuvent être, par exemple, de simples tiges cylindriques, orientées vers le mandrin 5, selon des directions perpendiculaires à l'axe A. Dans le cas, illustré ici, où la fonction des broches est limitée au blocage du pas de l'insert, l'extrémité interne des broches présente un certain jeu radial par rapport à la surface externe du mandrin 5, la longueur des broches étant néanmoins suffisante pour qu'elles puissent venir en appui latéralement sur l'insert 7. Alternativement, l'extrémité interne des broches 119 et/ou 119' peut venir en appui sur la surface externe du mandrin 5 ; les broches des dispositifs de blocage du pas 119 et/ou 119' constituent alors des moyens complémentaires - ou, éventuellement, les premiers moyens - de support et de centrage du mandrin 5. En variante, la surface extérieure de chaque broche peut être constituée par un manchon cylindrique tournant librement autour de la partie centrale de la broche à la façon d'un palier fixe.

Les quatre broches du premier dispositif de blocage 119 sont régulièrement disposées autour du mandrin 5, les axes radiaux des broches 119c, 119b et 119d formant, par rapport à la broche 119a, des angles valant respectivement 90°, 180° et 270°. Dans le sens longitudinal de l'axe A, les quatre broches 119 s'inscrivent dans des plans diamétraux qui sont également, dans le même ordre, régulièrement espacés de la broche 119a à la broche 119 d, la distance entre deux tels plans consécutifs pouvant, avantageusement, être égale à P/4. Si l'on considère la surface cylindrique d'axe A sur laquelle s'inscrit l'axe longitudinal du profilé enroulé hélicoïdalement qui constitue l'insert 7, on déduit que les traces sur ladite surface cylindrique, des axes radiaux des quatre broches 119a, 119c, 119b et 119d définissent une ligne hélicoïdale d'axe A, dont le pas est avantageusement égal au pas nominal P de l'insert 7.

Les quatre broches 119 étant solidaires de l'organe rotatif 8, chacune d'elles tourne autour de l'axe A à la vitesse angulaire ω, ce qui leur permet de se déplacer en restant dans l'espace libre entre deux spires contiguës de l'insert 7 sans gêner la progression de ce dernier par translation parallèlement à l'axe A.

De la même façon, les quatre broches 119'a, 119'c, 119'b et 119'd constituant le deuxième dispositif de blocage sont également échelonnées de façon régulière, c'est-à-dire angulairement dans le sens circonférentiel autour de l'axe A, et longitudinalement dans le sens de l'axe A, de telle sorte qu'elles définissent un passage libre hélicoïdal, de pas avantageusement égal à P, qui tourne autour de l'axe A à la vitesse angulaire ω, et dans lequel l'insert 7 peut progresser sans obstacles.

Les deux broches 119a et 119'a étant, dans chacun des deux dispositifs de blocage 119 et 119' celles qui sont les plus proches de l'autre dispositif, respectivement 119' et 119, la distance axiale qui les sépare, parallèlement à l'axe A, détermine la distance libre sur laquelle le pas de l'insert peut être augmenté à la valeur désirée. On peut ainsi définir la distance libre L comme étant égale à la distance entre les deux plans radiaux dans lesquels s'inscrivent les axes des deux parties de l'insert 7 qui sont en appui, respectivement, sur les broches 119a et 119'a.

Dans le cas représenté, la distance libre L correspond à un nombre entier de spires de l'insert lorsque ce dernier est enroulé à un pas nominal, avec L=9P. Mais, entre les broches 119a et 119'a, l'insert présente seulement trois spires au lieu de neuf spires, c'est-à-dire que, dans cet espace libre, l'insert présente localement un pas agrandi $P_1$ qui est égal à trois fois le pas nominal P.

Bien qu'une seule broche soit, en principe, suffisante pour constituer chacun des deux dispositifs de blocage 119 et 119', le nombre des broches est, de préférence, égal à au moins trois par dispositif, et, avantageusement ainsi qu'illustré sur la figure 7, égal à quatre, de sorte que les broches définissent un passage hélicoïdal, libre apte à loger au moins une spire de l'insert 7.

En variante, les dispositifs de blocage 119 et 119' peut comporter non pas des broches, mais des disques tournant librement, de préférence au moins trois disques pour chacun des deux dispositifs. Les axes de rotation des disques peuvent être parallèles à l'axe A. Avantageusement, les axes des disques sont disposés dans des plans parallèles à l'axe A, et ils forment avec ce dernier un angle, relativement faible, dont la valeur est complémentaire de l'angle d'armage de l'hélice dessinée par l'insert 7.

En variante, les éléments radiaux constituant chacun des deux dispositifs de blocage, peuvent encore, au lieu d'être distincts les uns des autres, former une surface géométrique continue, à la façon de la rainure hélicoïdale d'un écrou, avec des dimensions en section permettant de loger par exemple une spire de l'insert 7.

Sur la figure, est illustré un dispositif de passage radial de fluide à double point rotatif, similaire à l'exemple de la figure 4, installé dans l'espace libre entre les deux dispositifs de blocage du pas.

Le dispositif de passage radial comporte une bague 146 disposée dans un logement annulaire 147 qui est pratiqué sur la surface extérieure du mandrin 5, la bague 146 pouvant tourner librement autour du mandrin 5 et étant rendue solidaire de l'organe rotatif par une entretoise radiale (ER). Cette entretoise radiale (ER) est disposée radialement dans l'espace annulaire qui sépare l'organe rotatif 8 et le mandrin 5, et qui est occupé par l'insert 7, et elle présente une section qui peut être de faibles dimensions.

En outre, dans la zone de l'entretoise radiale (ER), l'organe rotatif 8 et le bâti 1 comportent des portées en regard présentant un faible jeu, cette disposition étant réalisée, dans l'exemple représenté par une partie annulaire en relief 142 que présente la surface extérieure de l'organe rotatif 8 ou alternativement une partie annulaire en relief interne ménagée dans le bâti 1.

Le dispositif de passage radial de fluide comporte un organe de passage radial creux étanche tel qu'un ajutage 151 disposé à l'intérieur de l'organe rotatif 8 et de l'entretoise radiale (ER), et débouchant du côté extérieur dans une gorge annulaire 145, ménagée dans la surface extérieure de l'organe rotatif 8, par exemple dans la partie en relief 142, et/ou dans la surface intérieure du bâti 1. L'ajutage 151 débouche du côté intérieur, dans une gorge annulaire 152 ménagée dans la surface intérieure de la bague 146 solidaire de l'organe rotatif 8, et/ou dans la surface du logement 147 pratiqué dans le mandrin 5.

Un conduit 156, en relation à travers le bâti 1 avec des circuits extérieurs, débouche dans la gorge annulaire extérieure 145.

Un conduit 154 interne au mandrin débouche dans la gorge annulaire intérieure 152.

L'étanchéité des deux joints tournants concentriques ainsi réalisée est obtenue par deux joints toriques 144, d'une part, et par deux autres joints toriques 153, d'autre part, entourant respectivement les gorges 145 et 152 de façon à obtenir un passage radial, fluide, étanche entre les conduits 156 et 154.

Avantageusement, la largeur de la bague annulaire 146, dans le sens de l'axe A, est supérieure à la dimension de l'entretoise radiale (ER) dans le sens de l'axe A. Ceci permet, d'une part, de réduire l'encombrement de l'entretoise radiale entre les spires de l'insert 7, et d'autre part, d'élargir l'espace utilisable pour loger la gorge 152 et les joints toriques 153. Dans ce cas, la bague 146 présente en dehors de son raccordement avec l'entretoise radiale (ER) une surface extérieure cylindrique dans le prolongement de la surface extérieure du mandrin 5.

Mais la bague 146 et l'entretoise radiale (ER) peuvent également présenter des dimensions égales dans le sens de l'axe A. On peut, en particulier, réduire la largeur de la bague 146, en disposant les joints toriques 143 dans le mandrin 5, sur les faces latérales radiales du logement annulaire 147.

Dans certains cas, en fonction, en particulier, du diamètre de l'insert et du pas nominal P, il est possible d'installer un dispositif de passage radial de fluide à double joint tournant, tel que décrit ci-dessus, sans qu'il soit nécessaire d'agrandir le pas de l'insert, ni de disposer le dispositif de passage de fluide entre deux dispositifs de blocage du pas de l'insert.

Dans la fabrication, en continu, d'un tube renforcé par un insert, il est nécessaire d'obtenir un tube qui soit le plus régulier et le plus homogène possible de façon à maintenir constantes les caractéristiques physiques du tube sur toute la longueur. Cette nécessité est d'autant plus impérative que le tube doit être réalisé en grande longueur continue, par exemple un tube de plusieurs centaines de mètres et même de plusieurs kilomètres. Un tel tube est fréquemment utilisé dans l'exploitation pétrolière.

Pour obtenir un tube régulier et homogène, il est nécessaire qu'à la sortie de la tête d'extrusion, on assure, à la fois, la régularité du pas et la concentricité de l'insert et une correcte conformation de la paroi tubulaire constituée par le matériau plastique extrudé en cours de solidification.

A cet effet, l'appareillage, selon l'invention, comprend un dispositif magnétique désigné ici écrou magnétique 58, constitué par des électro-aimants dont les pôles successifs sont disposés en hélice et au plus près des spires de l'insert 7. Le pas de l'hélice des pôles des électro-aimants est égal au pas nominal P des spires de l'insert 7.

L'insert 7 est stabilisé en pas et concentricité, dès la sortie de la tête d'extrusion 2, avant de pénétrer dans la zone où la matière plastique extrudée est solidifiée par refroidissement. Le contrôle de l'opération est obtenu au moyen de détecteurs de proximité qui sont disposés à intervalles angulaires réguliers et relativement près des spires de l'insert 7.

Les détecteurs de proximité qui peuvent être à inductance ou capacitance variable, permettent de régler de façon adéquate l'intensité des forces appliquées par les électro-aimants à l'insert 7, qui doit, évidemment, comporter un matériau ferromagnétique tel qu'un acier au carbone, de façon à obtenir à la fois le centrage des spires de l'insert et la correction du pas desdites spires.

L'écrou magnétique 58 est, de préférence, rotatif et entraîné en rotation à la vitesse angulaire ω de l'organe rotatif 8 et ce, par des moyens appropriés (mécaniques ou autres).

En variante, l'écrou magnétique est statique. La vitesse angulaire ω de l'organe rotatif 8 est recopiée, dans ce cas, par des moyens électriques tels qu'un ensemble Selsyn, assurant la commutation des pôles, lesquels dessinent, à chaque instant, une hélice de pas P, de telle sorte que l'hélice ainsi formée tourne autour de l'axe A avec la vitesse angulaire voulue.

L'écrou magnétique, décrit dans les deux variantes ci-dessus, est associé à un conformateur externe 59 qui comprend un manchon cylindrique mince 60, réalisé dans un métal particulièrement bon conducteur de la chaleur et s'étendant, sans discontinuité, de la tête d'extrusion 2 qu'il prolonge, jusqu'à des moyens de refroidissement, par exemple constitués par un radiateur à ailettes 61 qui est fortement ventilé (illustré sur la moitié inférieure de la figure 1), ou encore par une chambre annulaire 70 (illustré sur la moitié supérieure de la figure 1) dans laquelle est mis en circulation un fluide de refroidissement tel que de l'eau.

Le conformateur externe 59 peut comporter deux tronçons alignés de manchon cylindrique mince, 71 et 72, tous deux également dans un métal excellent conducteur, entre lesquels est intercalé un anneau en matériau isolant 73.

Dans une forme de réalisation préférée, l'appareillage comporte un conformateur interne désigné ici comme "conformateur fluide" comprenant un piston 62 qui est muni d'un ou plusieurs segments racleurs étanches 63. Sur la moitié inférieure de la figure 1, le piston 62 repose sur un siège 64 constitué par l'extrémité 55 du mandrin 5, cette position correspondant au début de l'extrusion du tube. Peu après le démarrage de l'extrusion, la pression du fluide agissant sur le piston 62 repousse ce dernier vers la position représentée sur la moitié supérieure de la figure 1. Le fluide est admis, à partir de la conduite d'arrivée 56, par exemple par le dispositif à joints tournants décrit précédemment, dans un conduit central 65, solidaire du mandrin 5 réalisé dans un matériau mauvais conducteur de chaleur. Le fluide sort du conduit 65 à travers des orifices radiaux 66 solidaires du piston 62 de façon à remplir une chambre annulaire 67 obturée frontalement, en aval, de manière étanche par le piston 62 avec le segment racleur 63, et latéralement, d'une part par la paroi interne du tube composite produit et d'autre part par la surface extérieure d'une tige creuse coulissante qui est solidaire du piston 62. La tige creuse est réalisée de façon à pouvoir se déplacer librement par translation dans la direction de l'axe A, par exemple en étant emmanchée à coulissement autour du conduit central (65).

La circulation du fluide est indiquée par les flèches 68 sur la figure 1. Le fluide, en léchant la paroi interne du tube composite sortant de la chambre de confluence 4, assure à la fois la tenue et le refroidissement dudit tube.

Une fois parvenu à l'extrémité amont de la chambre annulaire 67, limitée ici par le siège 64 constituant l'extrémité aval 55 du mandrin 5, le débit de fluide s'écoule dans l'espace annulaire entre le mandrin 5 et la tige creuse puis dans l'espace annulaire entre le conduit 65 et le mandrin 5, de façon à parvenir, par des canaux ménagés dans le mandrin 5, jusqu'à un deuxième dispositif de passage radial à joints tournants d'où il est évacué par la conduite 57.

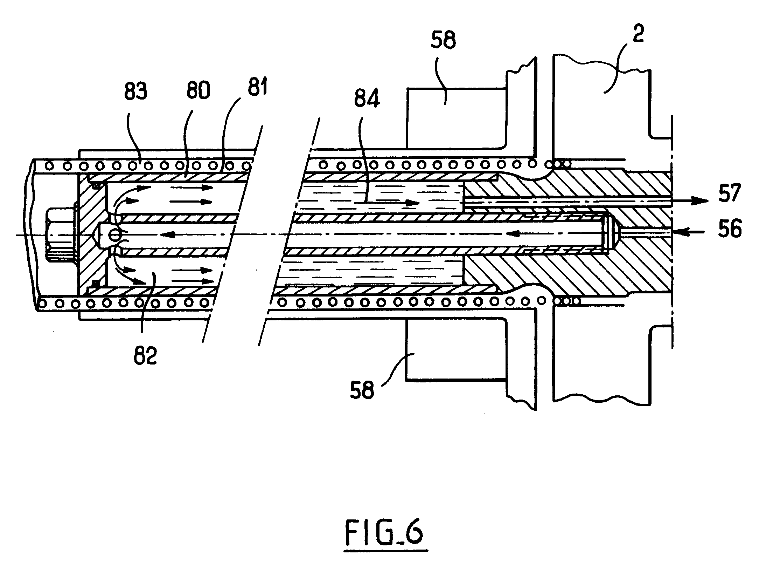

Alternativement, le conformateur interne peut comporter un chemisage 80 présentant une surface externe 81, par exemple métallique et éventuellement recouverte de Téflon (R), de forme cylindrique ou légèrement conique et sur laquelle glisse la paroi intérieure du tube composite formé 83, l'intérieur de ce chemisage constituant une chambre annulaire 82 dans laquelle circule le fluide de refroidissement 84. Le débit de fluide peut être réalisé en circulation perdue, avec une simple arrivée de fluide 56, ou en circuit fermé avec en plus une sortie de fluide 57 (figure 6).

Alternativement, selon une autre variante, le conformateur interne peut comporter une pluralité de bandes sans fin, allongées dans le sens des génératrices du tube composite formé, serrées les unes contre les autres de façon jointive ou avec un léger recouvrement, de façon que la surface géométrique enveloppée par la surface externe de chaque demi bande extérieure corresponde à la forme cylindrique voulue de la paroi interne du tube composite. Les bandes sont réalisées en un matériau présentant une certaine élasticité longitudinale. Chaque extrémité des bandes est enroulée autour d'un axe supporté par un manchon cylindrique rigide qui constitue un prolongement du mandrin 5 au delà de la tête d'extrusion. Chaque bande passe ainsi, d'une extrémité, de l'intérieur à l'extérieur du manchon et vice-versa à l'autre extrémité; le passage radial se faisant à travers une mortaise ou au delà dudit manchon selon le cas. L'ensemble des demi-bandes extérieures, qui sont ainsi supportées par le manchon intérieur résistant, constitue une surface de conformation cylindrique du diamètre voulu sur laquelle le tube composite prend appui tout en se déplaçant en translation sans présenter de mouvement relatif par rapport aux bandes. Des conformateurs internes à bande sans fin sont décrits notamment dans les brevets allemand 2 338 948 et français 2 239 638.

La figure 5 illustre un dispositif permettant d'améliorer le glissement sans frottement du tube composite produit sur les surfaces des conformateurs interne et/ou externe. L'électro-aimant 27 de la figure 1, porté par le bâti 1, est remplacé par deux électro-aimants 74 et 75 dont les pôles Nord et Sud respectifs sont voisins, mais légèrement décalés dans le sens circonférentiel autour de l'axe A, de sorte que les deux axes Nord/Sud forment un angle faible et qui peut être réglé. Les deux électro-aimants sont alimentés en alternance, tour à tour, par un pont redresseur par exemple, un électro-aimant étant alimenté lorsque l'autre ne l'est pas, et créent un champ de force oscillant qui sollicite le barreau aimanté 76 en vibration à une certaine fréquence, par exemple liée à celle du réseau.

Dans tout ce qui précède, on a fait référence à un axe longitudinal disposé horizontalement. Toutefois, l'axe longitudinal A de l'appareillage peut être vertical. Dans ce cas, l'insert 7 peut être approvisionné par le haut du bâti 1, le tube composite étant extrait de la tête d'extrusion par le bas. Une telle disposition permet, en particulier, d'améliorer la concentricité de l'insert dans la paroi du tube composite réalisé.

Quel que soit le mode de réalisation adopté, la correction du pas des spires de l'insert 7 est obtenue par le réglage des divers paramètres de fonctionnement, en particulier :

- la traction par l'organe de traction agissant sur le tube composite formé, en aval, lorsqu'il a acquis sa résistance suite au refroidissement, cette traction étant réglée en corrélation avec la vitesse à laquelle l'insert est formé par spiralage en amont de l'appareil (dans le cas de spiralage de l'insert simultané avec l'extrusion du tube composite),
- la vitesse angulaire $\omega$ de l'organe rotatif 8,
- le débit de matière plastique produit par l'extrudeuse,

ces paramètres étant ajustés en fonction du pas nominal P de l'insert, et leur action pouvant être complétée par l'effet régulateur de l'écrou magnétique 58.

L'insert 7 peut être constitué par deux profilés enroulés en hélice (même diamètre de fil, même pas, même diamètre moyen d'hélice) décalés de 1/2 pas. Dans ce cas, la tête 10 en forme d'écrou comporte deux rainures hélicoïdales 11, identiques, décalées de 1/2 pas.

Dans un mode de réalisation préféré de l'invention, l'insert 7 est fabriqué en continu par une spiraleuse de type connu, à partir d'un fil continu, l'insert 7 ne tournant pas. A cet effet, on peut se référer aux spiraleuses décrites par exemple dans les brevets U.S. 3 725 178, 3 885 605, 4 799 373 et 5 014 533. La vitesse de fabrication correspond à la vitesse de traction. L'insert 7 présente, en conséquence, un diamètre d'enroulement et un pas nominal P prédéterminés. Dans la réalisation d'un tube composite armé, selon la présente invention, pouvant présenter plusieurs kilomètres de longueur, il est impératif de ne pas interrompre l'extrusion pour quelque raison que ce soit. De ce fait, il est indispensable de se ménager entre les moyens de spiralage simultané de l'insert (ou les moyens de stockage) et la tête d'extrusion 2, une longueur suffisante de façon à pouvoir raccorder par soudure la longueur d'insert déjà mise en oeuvre à une nouvelle longueur d'insert produite par la spiraleuse.

L'insert 7 est mis en place autour de l'extrémité amont du mandrin 5 et il est amené à travers les dispositifs de l'appareillage tels que décrits ci-dessus, jusqu'à être introduit dans la tête d'extrusion 2. Dans la phase initiale de chargement et de réglage de l'appareillage, l'entraînement de l'organe tournant est réalisé de manière progressive de manière à faciliter la progression de l'insert 7 dans l'appareillage.

Lorsque l'insert 7 parvient à la chambre de confluence, il est noyé dans la matière extrudée amenée par les canaux 3. Les paramètres tels que définis ci-dessus sont réglés, c'est-à-dire, en particulier, qu'on entraîne l'organe tournant 8 à la vitesse $\omega$ et on règle le débit de matière jusqu'à ce que le tube composite défile à la vitesse v avec un insert présentant un pas nominal P.

On ne sort pas du cadre de l'invention en réalisant un pas de la rainure 11 qui ne serait pas constant, lequel pas pouvant être sensiblement égal au pas nominal P pour la première spire en amont et présenter une valeur réduite sur la dernière spire, en aval, juste avant de déboucher sur l'espace 13.

## Revendications

1. Appareil de production par extrusion en continu, de tubes renforcés par un insert, du type comprenant :

   - un bâti (1) comportant un tête d'extrusion (2) dans laquelle sont ménagés une chambre annulaire de confluence (4) et plusieurs canaux (3) débouchant dans ladite chambre annulaire de confluence et à travers lesquels est injectée au moins une matière extrudable ;

   - un organe support stationnaire (5) disposé en partie dans ladite tête d'extrusion dont la surface extérieure présente une forme générale de révolution autour d'un axe longitudinal (A).

   - un insert (7) disposé autour et le long dudit organe de support (5) suivant un pas prédéterminé ;

   - un organe d'entraînement (8) entraîné en rotation et monté dans le bâti (1), ledit organe d'entraînement comportant une extrémité (10) disposée dans la tête d'extrusion et munie d'au moins une rainure hélicoïdale (11) apte à recevoir au moins une spire (12) dudit insert et à entraîner ce dernier en translation caractérisé en ce qu'il comprend, en outre, des premiers moyens de support et de centrage (19) de l'organe support (5) qui sont disposés à l'intérieur et solidaires dudit organe d'entraînement (8), lesdits premiers moyens de support et de centrage (19) comportant un ensemble d'éléments radiaux (19a, 19b), espacés angulairement de façon régulière autour de l'organe support stationnaire, et décalés longitudinalement dans le sens de translation dudit insert (7) parallèle à l'axe de révolution (A) de l'organe support stationnaire (5), de manière que la surface d'appui desdits éléments radiaux sur ledit organe de support stationnaire (5) détermine un contact suivant une hélice et à permettre ainsi à l'insert (7) de se déplacer sans obstacle dans lesdits moyens de support et de centrage.

2. Appareil selon la revendication 1, caractérisé en ce que les premiers moyens de support et de centrage (19a, 19b) sont constitués par au moins trois éléments de support radiaux répartis régulièrement les uns par rapport aux autres et autour de l'organe de support stationnaire (5), les distances entre deux éléments consécutifs étant égales.

3. Appareil selon la revendication 2, caractérisé en ce que les éléments de support radiaux sont constitués par des broches (19a, 19b).

4. Appareil selon la revendication 3, caractérisé en ce qu'il comprend quatre broches radiales décalées dans le sens de translation d'un quart de pas de l'insert.

5. Appareil selon la revendication 2, caractérisé en ce que les éléments radiaux sont constitués par au moins trois disques.

6. Appareil selon l'une des revendications 2 à 5, caractérisé en ce que l'organe support stationnaire (5) comprend une piste de contact (21) sur laquelle sont en appui les extrémités intérieures desdites éléments radiaux (19a, 19b).

7. Appareil selon la revendication 6, caractérisé en ce que la surface externe de la piste de contact (21) est durcie superficiellement par un traitement de surface.

8. Appareil selon la revendication 6, caractérisé en ce que la surface externe de la piste de contact (21) est revêtue d'un matériau à coefficient de frottement relativement faible.

9. Appareil selon la revendication 1, caractérisé en ce que l'organe support stationnaire (5) est immobilisé en translation par des moyens de butée axiale (22) comportant au moins un élément de butée radial coopérant avec au moins une gorge annulaire (23) de l'organe de support stationnaire (5).

10. Appareil selon la revendication 9, caractérisé en ce que les moyens de butée axiale comportent deux éléments de butée radiaux (22) qui sont diamétralement opposés et décalés dans le sens de translation de l'insert (7).

11. Appareil selon la revendication 10, caractérisé en ce que les parois latérales de ladite gorge annulaire (23) sont durcies par un traitement de surface.

12. Appareil selon la revendication 9, caractérisé en ce que les parois latérales de ladite gorge annulaire (23) sont revêtues d'un matériau à coefficient de frottement relativement faible.

13. Appareil selon l'une des revendications 9 à 12, caractérisé en ce que les moyens de butée axiale (22) constituent également des seconds moyens de support et de centrage de l'organe de support stationnaire (5).

14. Appareil selon la revendication 1, caractérisé en ce qu'il comprend, en outre, des moyens d'immobilisation en rotation (24-28; 29-34; 35-41) de l'organe de support stationnaire (5).

15. Appareil selon la revendication 14, caractérisé en ce que les moyens d'immobilisation en rotation comportent des premiers moyens magnétiques (28) solidaires de l'organe de support stationnaire (5) et des seconds moyens magnétiques (27) solidaires du bâti (1), lesdits premier et second moyens magnétiques (27 et 28) présentant chacun des pâles diamétralement opposés par rapport à l'axe de révolution (A) de l'organe support stationnaire (5).

16. Appareil selon la revendication 15, caractérisé en ce que les moyens d'immobilisation en rotation comportent une section (24) ménagée dans l'organe rotatif (8) et munie d'une rainure hélicoïdale (25) dont le pas est supérieur au pas nominal (P) de l'insert et dans laquelle est logée une partie de l'insert (7) et une gorge annulaire (26) ménagée dans la surface extérieure de l'organe rotatif (8) et dans laquelle sont logés les pôles des seconds moyens magnétiques (27).

17. Appareil selon la revendication 14, caractérisé en ce que les moyens d'immobilisation en rotation de l'organe stationnaire support (5) sont constitués par deux roues dentées (29, 32) coopérant entre elles, une (29) desdites roues étant solidaire du bâti (1) et l'autre (32) étant solidaire de l'organe support stationnaire (5).

18. Appareil selon la revendication 14, caractérisé en ce que les moyens d'immobilisation en rotation de l'organe de support stationnaire (5) sont constitués par un arbre (38) monté radialement dans l'organe d'entraînement (8) et comportant un pignon conique (40, 41) à chacune de ses extrémités, un pignon (40) engrenant avec une première couronne dentée fixe (35) solidaire du bâti (1) et l'autre pignon (41) engrenant avec une deuxième couronne dentée (36) montée sur l'organe de support stationnaire (5).

19. Appareil selon la revendication 1, caractérisé en ce qu'il comprend, en outre, des moyens d'alimentation (42 à 56; 142 à 156) en fluide à l'intérieur de l'organe de support stationnaire et comportant au moins un conduit radial (51, 151) qui est solidaire de l'organe rotatif (8) et qui débouche à chaque extrémité dans des chambres annulaires (45, 52 ; 145, 152), de manière à constituer deux joints tournants concentriques.

20. Appareil selon la revendication 19, caractérisé en ce que les moyens d'alimentation en fluide comportent en outre une bague (46) solidaire de l'organe rotatif (8), un passage hélicoïdal (50), de pas supérieur au pas nominal (P) de l'insert (7), étant ménagé dans ladite bague (46), une partie de l'insert (7) étant logée dans ledit passage (50).

21. Appareil selon la revendication 1, caractérisé en ce qu'il comprend deux moyens de blocage du pas de l'insert (7), disposés à une certaine distance l'une de l'autre dans le sens longitudinal de l'organe support stationnaire (5), le nombre de spires que présente ledit insert (7) entre les deux moyens de blocage étant réduit par rapport au nombre de spires correspondant au pas nominal dudit insert (7).

22. Appareil selon les revendications 19 et 21, caractérisé en ce qu'il comprend les moyens d'alimentation en fluide (51, 45, 52 ; 151, 145, 152) sont disposés entre les moyens de blocage et comportent une bague (146) tournant à l'intérieur d'un logement (147) de l'organe support stationnaire (5) et reliée à l'organe rotatif (8) par une entretoise radiale (ER) dans laquelle est logé le conduit radial (151).

23. Appareil selon la revendication 1, caractérisé en ce qu'il comprend en outre, un dispositif magnétique (58) monté en aval de la tête d'extrusion (2) et dont les pôles successifs sont disposés en hélice, au plus près des spires de l'insert (7), le pas de ladite hélice étant égal au pas nominal ou prédéterminé des spires dudit insert (7).

24. Appareil selon la revendication 23, caractérisé en ce qu'il comprend des détecteurs de proximité qui permettent de régler, de manière appropriée, l'intensité des forces appliquées par le dispositif magnétique (58) à l'insert (7).

25. Appareil selon la revendication 1, caractérisé en ce qu'il comprend, en outre, un conformateur externe (59) en aval de la tête d'extrusion (2).

26. Appareil selon la revendication 25, caractérisé en ce que le conformateur (59) comprend une chambre annulaire (70) dans laquelle circule un fluide de refroidissement.

27. Appareil selon la revendication 25, caractérisé en ce que le conformateur (59) comprend deux tronçons cylindriques (71, 72) de faible épaisseur et entre lesquels est intercalé un anneau (73) en matériau isolant.

28. Appareil selon la revendication 1, caractérisé en ce qu'il comprend un conformateur interne comportant un piston (62) solidaire d'une tige creuse coulissant par rapport à un conduit (65) solidaire de l'organe support stationnaire (5), ledit piston passant d'une première position, en appui sur un siège (64) prévu à l'extrémité de l'organe support stationnaire (5), à une deuxième position où il délimite une chambre annulaire (67) alimentée en fluide par des orifices radiaux (66) ménagés dans le piston (62).

29. Appareil selon la revendication 1 caractérisé en ce qu'il comprend, en outre, deux électro-aimants (74, 75) qui sont légèrement décalés dans le sens circonférentiel autour de l'axe de l'organe support fixe, les deux électro-aimants (74, 75) étant alimentés en énergie alternativement l'un après l'autre, de manière à créer un champ de force oscillant.

## Claims

1. Apparatus for the continuous production by extrusion of tubes reinforced by an insert, of the type comprising:

   - a frame (1) including an extruder head (2) in which are formed an annular confluence chamber (4) and a plurality of passages (3) discharging into said annular confluence chamber and through which at least one extrudable material is injected;

   - a stationary support member (5) disposed partly in said extrusion head whose outside surface is a body of revolution about a longitudinal axis (A);

   - an insert (7) disposed around and along said support member (5) with a predetermined pitch;

   - a drive member (8) driven in rotation and mounted in the frame (1), said drive member having an end (10) disposed in said extruder head and provided with at least one helical groove (11) adapted to receive at least one turn (12) of said insert and to move the latter in translation, characterised in that it further comprises first means (19) for supporting and centring the support member (5) disposed inside and attached to said drive member (8), said first centring and supporting means (19) including a set of radial members (19a) equi-angularly spaced around the stationary support member and offset longitudinally in the direction of movement in translation of said insert (7) parallel to the axis of revolution (A) of the stationary support member (5) so that the surface at which said radial members bear on said stationary support member (5) determines contact along a helix and so enables the insert (7) to move freely in said supporting and centring means.

2. Apparatus according to claim 1 characterised in that the first supporting and centring means (19a, 19b) comprise at least three radial support members equi-angularly spaced around the stationary support member (5), the distances between two consecutive members being the same.

3. Apparatus according to claim 2 characterised in that the radial support members comprise pins (19a, 19b).

4. Apparatus according to claim 3 characterised in that it comprises four radial pins offset in the direction of movement in translation by one quarter of the pitch of the insert.

5. Apparatus according to claim 2 characterised in that the radial members comprise at least three discs.

6. Apparatus according to any one of claims 2 to 5 characterised in that the stationary support member (5) comprises a contact track (21) on which bear inner ends of said radial members (19a, 19b).

7. Apparatus according to claim 6 characterised in that the outside surface of the contact track (21) is surface hardened by surface treatment.

8. Apparatus according to claim 6 characterised in that the outside surface of the contact track (21) is covered with a material having a relatively low coefficient of friction.

9. Apparatus according to claim 1 characterised in that the stationary support member (5) is immobilised against movement in translation by axial abutment means (22) including at least one radial abutment member cooperating with at least one annular groove (23) of the stationary support member (5).

10. Apparatus according to claim 9 characterised in that the axial abutment means include two radial abutment means (22) which are diametrally opposed and offset in the direction of movement in translation of the insert (7).

11. Apparatus according to claim 10 characterised in that the side walls of said annular groove (23) are hardened by surface treatment.

12. Apparatus according to claim 9 characterised in that the side walls of said annular groove (23) are covered with a material having a relatively low coefficient of friction.

13. Apparatus according to any one of claims 9 to 12 characterised in that the axial abutment means (22) also constitute second supporting and centring means for the stationary support member (5).

14. Apparatus according to claim 1 characterised in that it further comprises means (24-28; 29-34; 35-41) for preventing rotation of the stationary support member (5).

15. Apparatus according to claim 14 characterised in that the rotation prevention means include first magnetic means (28) attached to the stationary support member (5) and second magnetic means (27) attached to the frame (1), said first and second magnetic means (27 and 28) each having poles diametrally opposed relative to the revolution axis (A) of the stationary support member (5).

16. Apparatus according to claim 15 characterised in that the rotation prevention means include a section (24) provided in the rotary member (8) and having a helical groove (25) whose pitch is greater than the nominal pitch (P) of the insert and in which part of the insert (7) is accommodated and an annular groove (26) in the outside surface of the rotary member (8) and in which the poles of the second magnetic means (27) are accommodated.

17. Apparatus according to claim 14 characterised in that the means for preventing rotation of the stationary support member (5) comprise two toothed wheels (29, 32) cooperating with each other, one wheel (29) being fastened to the frame (1) and the other wheel (32) being fastened to the stationary support member (5).

18. Apparatus according to claim 14 characterised in that the means for preventing rotation of the stationary support member (5) comprise a shaft (38) mounted radially in the drive member (8) and including a bevel gear (40, 41) at each end, one gear (40) meshing with a first fixed toothed ring (35) attached to the frame (1) and the other gear (41) meshing with a second toothed ring (36) mounted on the stationary support member (5).

19. Apparatus according to claim 1 characterised in that it further comprises means (42 to 56; 142 to 156) for feeding fluid to the interior of the stationary support member and including at least one radial passage (51, 151) attached to the rotary member (8) and discharging at each end into annular chambers (45, 52; 145, 152) to constitute two concentric rotating couplings.

20. Apparatus according to claim 19 characterised in that the fluid feed means further include a ring (46) attached to the rotary member (8), a helical passage (50) whose pitch is greater than the nominal pitch (P) of the insert (7) is formed in said ring (46) and part of the insert (7) is accommodated in said passage (50).

21. Apparatus according to claim 1 characterised in that it comprises two means for setting the pitch of the insert (7) disposed at a distance from each other in the longitudinal direction of the stationary support member (5), the number of turns of said insert (7) between the two setting means being less than the number of turns corresponding to the nominal pitch of said insert (7).

22. Apparatus according to claims 19 and 21 characterised in that the fluid feed means (51, 45, 52; 151, 145, 152) are disposed between the setting means and include a ring (146) turning inside a housing (147) in the stationary support member (5) and connected to the rotary member (8) by a radial spacer (ER) in which the radial passage (151) is accommodated.

23. Apparatus according to claim 1 characterised in that it further comprises a magnetic device (58) mounted on the downstream side of the extruder head (2) and whose successive poles are disposed in a helix as close as possible to the turns of the insert (7) and the pitch of said helix is equal to the nominal or predetermined pitch of the turns of said insert (7).

24. Apparatus according to claim 23 characterised in that it comprises proximity sensors for appropriately adjusting the intensity of the forces applied by the magnetic device (58) to the insert (7).

25. Apparatus according to claim 1 characterised in that it further comprises an external conforming device (59) on the downstream side of the extruder head (2).

26. Apparatus according to claim 25 characterised in that the conforming device (59) comprises an annular chamber (70) in which a cooling fluid flows.

27. Apparatus according to claim 25 characterised in that the conforming device (59) has two thin cylindrical sections (71, 72) of low thickness and between which is an insulative material ring (73).

28. Apparatus according to claim 1 characterised in that it comprises an internal conforming device having a piston (62) fastened to a hollow rod sliding relative to a passage (65) fastened to the stationary support member (5) and said piston moves from a first position bearing on a seat (64) at the end of the stationary support member (5) to a second position at which it delimits an annular chamber (67) fed with fluid via radial orifices (66) in the piston (62).

29. Apparatus according to claim 1 characterised in that it further comprises two solenoids (74, 75) which are slightly offset in the circumferential direction around the axis of the fixed support member and are energised alternately to create an oscillating force field.

**Patentansprüche**

1. Extrusionsvorrichtung zur kontinuierlichen Herstellung von durch einen Einsatz verstärkten Rohren, umfassend:

- einen Rahmen (1) mit einem Extrusionskopf (2), in dem eine ringförmige Zusammenflußkammer (4) und mehrere Kanäle (3) vorgesehen sind, die in die Zusammenflußkammer münden und durch die mindestens ein extrudierbarer Stoff eingespritzt wird;
- ein feststehendes Tragorgan (5), das zum Teil in dem Extrusionskopf angeordnet ist und dessen Außenfläche eine allgemeine Rotationsform um eine Längsachse (A) besitzt;
- einen Einsatz (7), der um das Tragorgan (5) herum und längs diesem mit einer vorbestimmten Steigung angeordnet ist;
- ein in dem Rahmen (1) montiertes, in Drehung versetztes Antriebsorgan (8), das ein im Extrusionskopf angeordnetes Ende (10) besitzt, das mit mindestens einer schraubenförmigen Nut (11) versehen ist, die mindestens eine Windung (12) des Einsatzes aufnehmen und diesen in Translation antreiben kann, dadurch gekennzeichnet, daß sie außerdem erste Mittel (19) zum Tragen und Zentrieren des Tragorgans (5) aufweist, die im Inneren des Antriebsorgans (8) angeordnet und mit diesem fest verbunden sind, wobei diese ersten Trag- und Zentriermittel (19) eine Gruppe von radialen Elementen (19a, 19b) aufweisen, die winkelmäßig um das feststehende Tragorgan herum in regelmäßigen Abständen angeordnet sind und in Längsrichtung in der zur Rotationsachse (A) des feststehenden Tragorgans (5) parallelen Translationsrichtung des Einsatzes (7) versetzt sind, so daß die Fläche, mit der diese radialen Elemente an dem feststehenden Tragorgan (5) anliegen, einen Kontakt längs einer Schraube bildet und der Einsatz (7) sich ohne Hindernis in den Trag- und Zentriermitteln bewegen kann.

2. Vorrichtung nach Anspruch 1, dadurch gekennzeichnet, daß die ersten Trag- und Zentriermittel (19a, 19b) aus mindestens drei radialen Tragelementen bestehen, die um das feststehende Tragorgan (5) herum in Bezug aufeinander regelmäßig verteilt sind, wobei die Abstände zwischen zwei aufeinanderfolgenden Elementen gleich sind.

3. Vorrichtung nach Anspruch 2, dadurch gekennzeichnet, daß die radialen Tragelemente aus Stiften (19a, 19b) bestehen.

4. Vorrichtung nach Anspruch 3, dadurch gekennzeichnet, daß sie vier radiale Stifte aufweist, die in der Translationsrichtung um ein Viertel der Steigung des Einsatzes versetzt sind.

5. Vorrichtung nach Anspruch 2, dadurch gekennzeichnet, daß die radialen Elemente aus mindestens drei Scheiben bestehen.

6. Vorrichtung nach einem der Ansprüche 2 bis 5, dadurch gekennzeichnet, daß das feststehende Tragorgan (5) eine Kontaktbahn (21) aufweist, auf der die inneren Enden der radialen Elemente (19a, 19b) aufliegen.

7. Vorrichtung nach Anspruch 6, dadurch gekennzeichnet, daß die Außenfläche der Kontaktbahn (21) oberflächlich durch eine Oberflächenbehandlung gehärtet ist.

**8.** Vorrichtung nach Anspruch 6, dadurch gekennzeichnet, daß die Außenfläche der Kontaktbahn (21) mit einem Werkstoff mit relativ niedrigem Reibungskoeffizient beschichtet ist.

**9.** Vorrichtung nach Anspruch 1, dadurch gekennzeichnet, daß das feststehende Tragorgan (5) in Translation durch Axialanschlagmittel (22) blockiert ist, die mindestens ein radiales Anschlagelement aufweisen, das mit mindestens einer ringförmigen Nut (23) des feststehenden Tragorgans (5) zusammenwirkt.

**10.** Vorrichtung nach Anspruch 9, dadurch gekennzeichnet, daß die axialen Anschlagmittel zwei radiale Anschlagelemente (22) aufweisen, die einander diametral entgegengesetzt sind und in der Translationsrichtung des Einsatzes (7) versetzt sind.

**11.** Vorrichtung nach Anspruch 10, dadurch gekennzeichnet, daß die Seitenwände der ringförmigen Nut (23) durch eine Oberflächenbehandlung gehärtet sind.

**12.** Vorrichtung nach Anspruch 9, dadurch gekennzeichnet, daß die Seitenwände der ringförmigen Nut (23) mit einem Werkstoff mit relativ niedrigem Reibungskoeffizient beschichtet sind.

**13.** Vorrichtung nach einem der Ansprüche 9 bis 12, dadurch gekennzeichnet, daß die Axialanschlagmittel (22) auch zweite Trag- und Zentriermittel des feststehenden Tragorgans (5) bilden.

**14.** Vorrichtung nach Anspruch 1, dadurch gekennzeichnet, daß sie außerdem Mittel (24-28; 29-34; 35-41) zur Drehblockierung des feststehenden Tragorgans (5) aufweist.

**15.** Vorrichtung nach Anspruch 14, dadurch gekennzeichnet, daß die Drehblockierungsmittel mit dem feststehenden Tragorgan (5) fest verbundene, erste magnetische Mittel (28) und mit dem Rahmen (1) fest verbundene, zweite magnetische Mittel (27) aufweist, wobei dieses erste magnetische Mittel (28) und dieses zweite magnetische Mittel (27) jeweils Pole aufweisen, die bezüglich der Rotationsachse (A) des feststehenden Tragorgans (5) einander diametral entgegengesetzt sind.

**16.** Vorrichtung nach Anspruch 15, dadurch gekennzeichnet, daß die Drehblockierungsmittel einen in dem drehbaren Organ (8) vorgesehenen Abschnitt (24), der mit einer schraubenförmigen Nut (25) versehen ist, deren Steigung größer als die Nennsteigung (P) des Einsatzes ist und in der ein Teil des Einsatzes (7) angeordnet ist, und eine in der Außenfläche des drehbaren Organs (8) vorgesehene ringförmige Nut (26) aufweisen, in der die Pole der zweiten magnetischen Mittel (27) angeordnet sind.

**17.** Vorrichtung nach Anspruch 14, dadurch gekennzeichnet, daß die Mittel zur Drehblockierung des feststehenden Tragorgans (5) aus zwei zusammenarbeitenden Zahnrädern (29, 32) bestehen, deren eines (29) mit dem Rahmen (1) und deren anderes (32) mit dem feststehenden Tragorgan (5) fest verbunden ist.

**18.** Vorrichtung nach Anspruch 14, dadurch gekennzeichnet, daß die Mittel zur Drehblockierung des feststehenden Tragorgans (5) aus einer Welle (38) bestehen, die in dem Antriebsorgan (8) radial montiert ist und an jedem ihrer Enden ein Kegelzahnrad (40, 41) aufweist, wobei ein Zahnrad (40) mit einem ersten feststehenden, mit dem Rahmen (1) fest verbundenen Zahnkranz (35) in Eingriff ist und das andere Zahnrad (41) mit einem zweiten, auf dem feststehenden Tragorgan (5) montierten Zahnkranz (36) in Eingriff ist.

**19.** Vorrichtung nach Anspruch 1, dadurch gekennzeichnet, daß sie außerdem Mittel (42 bis 56; 142 bis 156) zur Versorgung des Inneren des feststehenden Tragorgans mit Fluid aufweist, die mindestens einen radialen Kanal (51, 151) umfassen, der mit dem drehbaren Organ (8) fest verbunden ist und an jedem Ende in ringförmige Kammern (45, 52; 145, 152) mündet, so daß zwei konzentrische Drehverbindungen gebildet werden.

**20.** Vorrichtung nach Anspruch 19, dadurch gekennzeichnet, daß die Mittel zur Versorgung mit Fluid außerdem einen mit dem drehbaren Organ (8) fest verbundenen Ring (46) aufweisen, in dem ein schraubenförmiger Durchgang (50) vorgesehen ist, dessen Steigung größer als die Nennsteigung (P) des Einsatzes (7) ist und in dem ein Teil des Einsatzes (7) angeordnet ist.

**21.** Vorrichtung nach Anspruch 1, dadurch gekennzeichnet, daß sie zwei Mittel zur Blockierung der Steigung des Einsatzes (7) aufweist, die in der Längsrichtung des feststehenden Tragorgans (5) in einem gewissen Abstand voneinander angeordnet sind, wobei die Anzahl von Windungen, die der Einsatz (7) zwischen den beiden Blockiermitteln aufweist, gegenüber der der Nennsteigung des Einsatzes (7) entsprechenden Anzahl von Windungen reduziert ist.

**22.** Vorrichtung nach Anspruch 19 und 21, dadurch gekennzeichnet, daß die Mittel (51, 45, 52; 151, 145, 152) zur Versorgung mit Fluid zwischen den Blockiermitteln angeordnet sind und einen Ring (146) aufweisen, der sich im Inneren einer Aufnahme (147) des feststehenden Tragorgans (5) dreht und mit dem rotierenden Organ (8) durch einen radialen Steg (ER) verbunden ist, in dem der radiale Kanal (151) angeordnet ist.

23. Vorrichtung nach Anspruch 1, dadurch gekennzeichnet, daß sie außerdem eine magnetische Vorrichtung (58) aufweist, die hinter dem Extrusionskopf (2) angeordnet ist und deren aufeinanderfolgende Pole schraubenförmig sehr nahe bei den Windungen des Einsatzes (7) angeordnet sind, wobei die Steigung dieser Schraube gleich der Nennsteigung oder der vorbestimmten Steigung der Windungen des Einsatzes (7) ist.

24. Vorrichtung nach Anspruch 23, dadurch gekennzeichnet, daß sie Näherungsfühler aufweist, die es gestatten, die Stärke der durch die magnetische Vorrichtung (58) an den Einsatz (7) angelegten Kräfte in geeigneter Weise zu regeln.

25. Vorrichtung nach Anspruch 1, dadurch gekennzeichnet, daß sie außerdem hinter dem Extrusionskopf (2) ein äußeres Formgebungsorgan (59) aufweist.

26. Vorrichtung nach Anspruch 25, dadurch gekennzeichnet, daß das Formgebungsorgan (59) eine ringförmige Kammer (70) aufweist, in der ein Kühlfluid umläuft.

27. Vorrichtung nach Anspruch 25, dadurch gekennzeichnet, daß das Formgebungsorgan (59) zwei zylindrische Abschnitte (71, 72) geringer Dicke aufweist, zwischen die ein Ring (73) aus isolierendem Werkstoff eingesetzt ist.

28. Vorrichtung nach Anspruch 1, dadurch gekennzeichnet, daß sie ein inneres Formgebungsorgan aufweist, das einen Kolben (62) aufweist, der mit einer hohlen Stange fest verbunden ist, die auf einem mit dem feststehenden Tragorgan (5) fest verbundenen Kanal (65) gleitet, wobei dieser Kolben von einer ersten Stellung, in der er an einem am Ende des feststehenden Tragorgans (5) vorgesehenen Sitz (64) anliegt, in eine zweite Stellung übergehen kann, in der er eine ringförmige Kammer (67) abgrenzt, die über im Kolben (62) vorgesehene radiale Öffnungen (66) mit Fluid versorgt wird.

29. Vorrichtung nach Anspruch 1, dadurch gekennzeichnet, daß sie außerdem zwei Elektromagnete (74, 75) aufweist, die in der Umfangsrichtung um die Achse des feststehenden Tragorgans herum leicht versetzt sind und die nacheinander abwechselnd mit Energie versorgt werden, so daß ein schwingendes Kraftfeld erzeugt wird.

FIG_1

FIG.2

FIG.3

FIG.4

FIG.5

FIG.6

FIG_7

156
144
152
145
142
151
119'a
"ER"
119a
1
8
154
$P_1$= Pas agrandi
5
Distance libre L
Pas P
7
119'b
147
153
152
146
119b

EP 0 655 968 B1